# EUROPEAN PATENT SPECIFICATION

(11) **EP 3 667 759 B1**
(45) Date of publication and mention of the grant of the patent: **29.09.2021**
(21) Application number: 18211669.9
(22) Date of filing: 11.12.2018
(51) Int. Cl.: H01M 50/20, H01M 10/613, H01M 10/625, H01M 10/6556, H01M 10/6567

(54) **BATTERY MODULE HOUSING SYSTEM WITH INTEGRATED COOLING MEANS**
BATTERIEMODULGEHÄUSESYSTEM MIT INTEGRIERTER KÜHLEINRICHTUNG
SYSTÈME DE BOÎTIER DE MODULE DE BATTERIE DOTÉ DE MOYENS DE REFROIDISSEMENT INTÉGRÉS

(43) Date of publication of application: 17.06.2020
(73) Proprietor: Samsung SDI Co., Ltd., Gyeonggi-do 17084 (KR)
(72) Inventor: Rath, Helmut, 8481 St. Veit / Südstmk. (AT)
(74) Representative: Gulde & Partner

(56) References cited:
- US-A1- 2012 156 543
- US-A1- 2018 006 344

## Description

### Field of the Invention

The present invention relates to a battery module housing system, and in particular to a battery module housing system with an integrated cooling means. The present invention further relates to a method for manufacturing the battery module housing system with an integrated cooling means. Moreover, the present invention relates to a battery module housing being assembled using the battery module housing system according to the invention as well as to a method of assembling said battery module housing system to a battery module housing.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

The mechanical integration of such a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e. g. an electric vehicle.

To provide thermal control of the battery pack, a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting / discharging / dissipating heat from the cells is required.

An effective way of cooling the battery module(s) is to provide a cooling system that is integrated into the carrier framework for the battery module(s) as described above. In the following, a carrier framework for battery module(s) is referred to as "battery module housing" or, as a shortcut, simply as "housing." Moreover, the single noun "battery module" shall also encompass the case that a plurality of battery modules is considered.

A battery module housing with an integrated cooling system may be realized by a box configured for accommodating the battery module, wherein the bottom plate of the box comprises a cavity, through which a coolant can be streamed. Therefore, fresh coolant has to be introduced into the cavity via a coolant inlet, and the coolant having received and absorbed heat from the battery module through that part of the housing, which separates the battery module from the cavity, has to be led away from the cavity via a coolant outlet.

Thus, a battery module housing with an integrated cooling system usually comprises a cavity as well as a coolant inlet and a coolant outlet. These main-parts have to be qualified for a liquid-tight coolant area and a liquid-tight outlet of the cooling-connectors against the environment. The cells need to be attached to the cooler surface by some kind of thermal interface material in order to secure and enhance the thermal connection. Therefore, at least that part of the housing, which separates the battery module from the cavity, is preferably made of a material having a high heat conductivity such as aluminum.

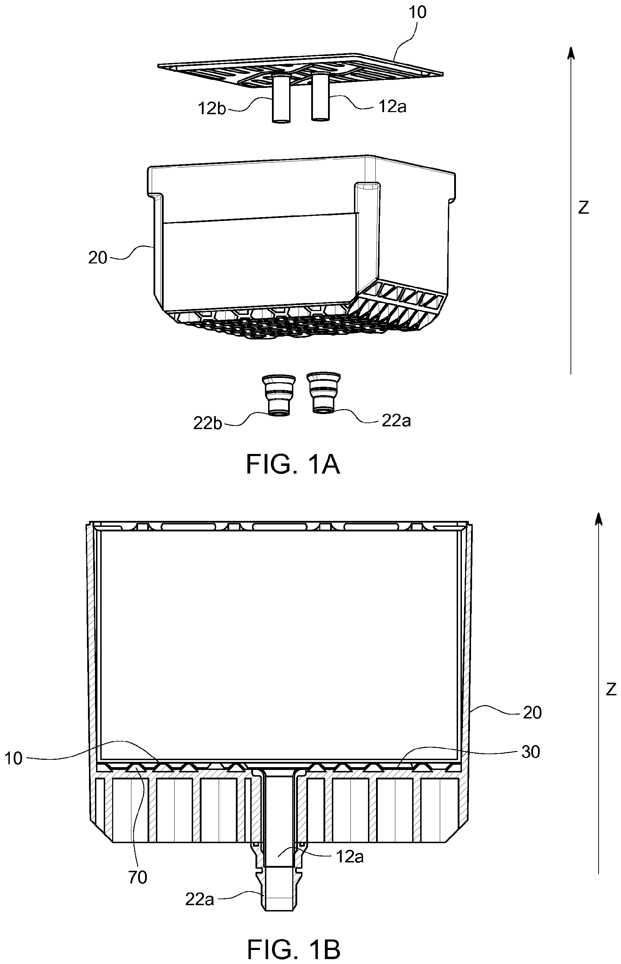

Figs. 1a - 1c show a standard design of a battery module housing with an integrated cooling system. In the following, expressions like "bottom," "upper," "lower," and the like are to be considered with regard to the direction z as marked in these figures, wherein the tip of arrow z directs upwards. A box 20 provides a means for accommodating one or more battery modules 5 and may be manufactured by injection-molding. The inside bottom of box 20 is covered with a soldered aluminum-plate 10 such that a cavity 30 is formed between the inside bottom of box 20 and the soldered aluminum-plate 10. To maintain a distance between the inside bottom of box 20 and the lower side of the aluminum-plate 20, one or more risings 70 can be provided on the inside bottom of box 20. Aluminum-plate 20 serves as thermal interface material such that heat dissipated from a battery module resting on the aluminum-plate 20 is efficiently conducted to cavity 30.

Attached to the soldered aluminum-plate 10 are two hoses 12a, 12b that may be formed, for example, of plastics, through which a coolant can be supplied to the cavity or discharged from the cavity (cf. Fig. 1a). These three single parts are usually composed to one component of the housing, but consist of different materials.

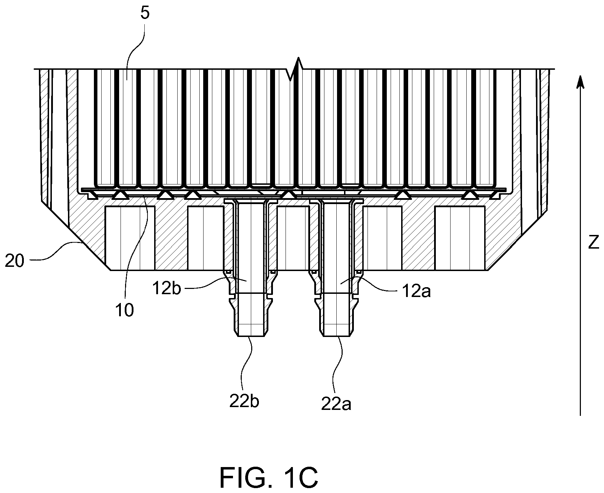

When inserting the aluminum-plate 10 into box 20, the hoses 12a, 12b are led through two corresponding through-holes in the bottom plate of box 20 such that the hoses extend out of the lower side of the bottom plate of box 20 as illustrated in Figs. 1b and 1c. Then, cooling-connectors 22a, 22b are attached and fixed to the lower side of the bottom plate of box 20 such that the parts of the hoses extending from the lower side of the bottom plate of box 20 are each covered by one of the cooling-connectors. The cooling-connectors are each a means, to which a hose or conduit is connectable in order to provide / discharge coolant to / from cavity 30.

To provide for a liquid-tight cavity as well as liquid-tight connections for introducing and discharging the coolant, sealings are usually required at the junction lines / junction planes of different components of the housing.

As could be taken from the above, at least six single components have to be assembled in order to manufacture a battery module housing with an integrated cooling system according to the state of the art. Moreover, different types of material (plastics, aluminum, ...) have to be combined during the manufacturing process. The manufacture process is normally performed manually; in other words: it is time-consuming and cost-intensive.

Further, housed battery modules are usually mounted as a whole into their application environment, e. g. an electric vehicle. Thus, the replacement of defect system parts, e. g. a defect battery module, requires dismounting the whole battery module housing and removal of its housing first. When the housing is assembled of a high number of components, even defects of small and/or cheap system parts might then require a complex process of dismounting, replacement of the battery module, and remounting the battery system.

US 2012 / 156543 A1 concerns a battery pack including a frame member, first and second lithium ion cells, and an isolation plate. The frame member includes a floor, walls formed perpendicular to the floor, and an aperture defined by the walls.

US 2018 / 006344 A1 provides a heat exchanger for battery cooling to improve an efficiency of cooling of the current heat exchangers. The heat exchanger for battery cooling comprises an upper housing with a fluid inlet and a fluid outlet, a lower housing capable of hermetically connecting with the upper housing to form a chamber for accommodating fluid. The fluid flows into the chamber through the fluid inlet and then exits through the fluid outlet. The fluid chamber is provided with at least one S-shaped fluid directing element with several through holes. With the S-shape directing elements within the fluid chamber and the through holes formed on the directing elements, fluid can flow in an injecting manner within the chamber to realize effective cooling of the upper housing.

It is thus an object of the present invention to overcome or reduce at least some of the drawbacks of the prior art and to provide a battery module housing and a battery module housing system having a reduced number of components and also allows for a reduction of the number of material types employed in the battery module housing and a battery module housing system. It is thus an object of the present invention to provide a simplified manufacturing process as compared to the state of the art. These objectives are achieved by the battery module housing and a battery module housing system as well as by the method for manufacturing the battery module housing system and the method for assembling the battery module housing system into a battery housing according to the independent claims.

### Summary of Invention

One or more of the drawbacks of the prior art could be avoided or at least reduced by means of the present invention as disclosed by the independent claims.

The invention comprises the following advantages in respect to the above described state of the art:
- No different material pairings
- Elimination of the complex manufacturing process of an aluminum cooler
- Reduction of assembly steps
- Reduction of parts (ASM-Cooler, Sealings, cooling-connectors)
- Reduction of assembly costs

Embodiments of the present disclosure seek to solve at least one of the problems existing in the prior art to at least some extent.

As a summary, the invention in particular allows for an integration of a cooler in an injection-molded battery module housing bottom part, for an elimination of the complex manufacturing process of an aluminium cooler, and for the assembly of cooler to housing and cooling connections and eliminating sealing interfaces.

The following general description of the invention as well as the claims use terms like "lower part," "upper part," "lower side," "upper side," and the like. These terms are only used to distinguish one element from another element. They do, in particular, not delimit the invention / the claimed subject-matter to a certain direction in which it (e. g., the battery module housing system, see below) has to be held, positioned, built or assembled. In other words, a "lower element" (e. g., a lower part, a lower side, etc.) may just as well be named a "first element" (e. g., a first part, a first side, etc.) and, similarly, an "upper element" (e. g., an upper part, an upper side, etc.) may be named a "second element," without departing from the scope of the present invention. Of course, it would be likewise possible to term a "lower element" a "second element" and an "upper element" a "first element" or to choose any other terminology as long as the terminology preserves the distinguishability of different elements.

However, the terms are chosen so that they may be read with regard to a certain predefined direction, e. g., a (virtual) z-axis, wherein the z-axis defines an orientation into an upward direction. One also may consider that device according to the following description and the claims may be described with regard to the orientation of the z-axis, wherein the z-axis may be oriented opposite to the direction of the gravitational field. This may increase the intelligibility of the description and the claims, but does not delimit the claimed subject-matter to such an orientation. That is to say, the virtual z-axis, with respect to which the invention / the claimed subject-matter is described, may be oriented into any arbitrary direction, i. e., said z-axis may be oriented in the direction opposite to a gravitational field, but may just as well be oriented in any other direction possible in the 3-dimensional space.

One aspect of the invention relates to a battery module housing system for cooling a battery module. The battery module housing comprises a lower part and an upper part. The lower part comprises a plate. The plate has an upper side and a lower side, the lower side being opposite to the upper side with respect to the plate. The upper side of the plate is connectable to the upper part. In particular, the upper side of the plate may be connectable to a lower side of a bottom tile of the upper part. The plate further has at least one coolant inlet and at least one coolant outlet. Also, the plate inclusive of the coolant inlet(s) and the coolant outlet(s) is formed integrally. The upper part comprises a tub. The tub is configured for accommodating a battery module. The tub has a bottom tile with an upper side and a lower side, the lower side being opposite to the upper side with respect to the bottom tile. The lower side of the bottom tile is connectable to the upper side of the plate. Also, the tub is formed integrally. The upper side of the plate and/or the lower side of the bottom tile are formed such that, when the upper side of the plate is connected to the lower side of the bottom tile, a cavity is formed between the upper side of the plate and the lower side of the bottom tile. The upper side of the plate and/or the lower side of the bottom tile may have a depression. The cavity forms a liquid-tight hollow, which is only accessible via the coolant inlet(s) and the coolant outlet(s).

The expression "formed integrally" shall denote in this context that the component formed integrally is made in one piece and as one piece.

As can be taken from the above, the battery module housing system (hereinafter also shortly referred to as "housing system" or simply as "system") comprises two parts - a lower part and an upper part -, wherein each of these parts is formed integrally. Further, it can be taken from the above that the battery module housing system may be in two states: (i) an "unconnected state," i. e., a state in which the lower part and the upper part are not connected / not attached to each other, i. e., wherein the lower part and the upper part are separated from each other and (ii) a "connected state" or equivalently an "assembled state," i. e., a state in which the lower part and the upper part are connected or attached to each other, including the case that the lower part and the upper part are fixedly connected to each other. In particular, the formulation that the housing system is "in a connected state" refers to the case that the lower part and the upper part of the system are connected / attached to another such that a cavity is formed between the upper side of the plate and the lower side of the bottom tile, wherein the cavity forms a liquid-tight hollow, which is only accessible via the coolant inlet(s) and the coolant outlet(s). Further, in case that the housing system is in the "connected / assembled state" as described above, the housing system is also shortly referred to as "battery module housing" or simply as "housing."

In one embodiment of the battery module housing system according to the invention, the lower part is manufactured in one piece by injection molding.

In one embodiment of the battery module housing system according to the invention, the upper part is manufactured in one piece by injection molding.

In a further embodiment of the battery module housing system, the lower part is made of plastics or resin.

In an alternative embodiment, the upper part is made of plastics or resin.

In a preferred embodiment of the battery module housing system, an additive is comprised in the upper part, the additive being suitable to increase the heat conductivity of the upper part. The additive may have been added to the plastic-granulate, with which the upper part has been formed during the manufacture process. It is desirable to have a high heat conductivity in particular of the bottom tile of the upper part, since then, heat can easily be dissipated and/or conducted from a battery module being in contact or in the vicinity of the upper side of the bottom tile to the lower side of the bottom tile, which acts as one confinement of the cavity when the housing system is in the assembled state. Then, the heat can be absorbed by a coolant present in the cavity and eventually discharged together with the coolant.

According to one embodiment of the battery module housing system, the upper side of the plate and the lower side of the bottom tile are congruent or essentially congruent. Preferably, the cavity has a flat shape and extends along the lower side of the bottom tile. Then, the common surface of the bottom tile and the cavity has a maximum size such that surface through which heat can be conducted from the upper side of the bottom tile to the cavity (and a coolant possibly therein) is maximized.

In one embodiment of the battery module housing system, a depression is formed on the upper side of the plate and is confined by a wall, for example a closed wall, rising along the edge of the upper side of the plate, wherein the upper side of the plate is connectable via the wall to the lower side of the bottom tile. The depression provides an easy way to form a cavity between the lower side of the bottom tile and the upper side of the plate.

In another embodiment, a depression is formed on the lower side of the bottom tile and is confined by a wall, for example a closed wall, rising along the edge of the lower side of the bottom tile, wherein the lower side of the bottom tile is connectable via the wall to the upper side of the plate.

In an alternative embodiment, a first depression is formed on the upper side of the plate and is confined by a first wall, for example a first closed wall, rising along the edge of the upper side of the plate, a second depression is formed on the lower side of the bottom tile and is confined by a second wall, for example a second closed wall, rising along the edge of the lower side of the bottom tile, and the plate and the bottom tile are connectable such that the first wall and the second wall rest on each other along their complete lengths.

The term "closed wall" used in the above shall denote a wall running a closed line or closed curve, viz. a line or curve not having a start point or an end point such as a circle.

In one embodiment of the battery module housing system, each coolant inlet comprises an inlet through-hole in the plate of the bottom part and an inlet connector formed on a lower side of the plate, the inlet connector being configured to be connected to a delivering ductwork, for example a hose or a conduit, such that coolant delivered by the delivering ductwork is led through the inlet through-hole to the upper side of the plate. Such a design of a plate with coolant inlet(s) simplifies the manufacture of an integrally formed lower part.

Correspondingly, each coolant outlet comprises an outlet through-hole in the plate of the bottom part and an outlet connector formed on a lower side of the plate, the outlet connector being configured to be connected to discharge ductwork, for example a hose or a conduit, such that coolant can be led from the upper side of the plate through the outlet through-hole into the discharge ductwork. Such a design of a plate with coolant outlet(s) further simplifies the manufacture of an integrally formed lower part.

Preferably, each inlet connector and each outlet connector is shaped as pin formed on the lower side of the plate at the location of the respective through-hole through the plate, the respective through-hole extending further through the pin. A pin is an easy way to provide a connecting means for connecting a ductwork such as a hose or a conduit.

In one embodiment of the battery module housing system according to the invention, at least on one of the upper side of the plate and the lower side of the bottom tile is formed a guiding geometry suitable for guiding a coolant streaming into the cavity via the coolant inlet to the coolant outlet along at least one path. The path may have a plurality of branches, a plurality of junctions and/or a plurality of by-passes. Such a design increases the regions where coolant is actually streaming along the lower side of the bottom tile, i. e., increases a replacement of already heated coolant by "fresh" coolant, i. e., by coolant newly supplied through the inlet connector.

According to an embodiment of the battery module housing system, the guiding geometry is further configured for preventing a coolant flowing from the coolant inlet to the coolant outlet from taking the straight line from the coolant inlet to the coolant outlet.

In one embodiment of the battery module housing system, on at least on one of the upper side of the plate and the lower side of the bottom tile are formed a plurality of risings suitable for increasing the mechanical stability of the assembled battery module housing system (i. e., the battery module housing). In particular the burst-pressure properties, e. g., the mechanical stability against burst leakage, of the assembled battery module housing system is increased in such a design.

Preferably, the risings are therefore located at least in the center of the cavity of the battery module system when being in the assembled state.

According to a preferred embodiment of the battery module housing system, the risings are formed at least on one of the upper side of the plate and the lower side of the bottom tile. Each of the risings extends to the opposite side of the cavity when the battery module system is in the assembled state.

In one embodiment of the battery module housing system, both, the upper side of the plate and the lower side of the bottom tile are of a rectangular shape. The upper part comprises four side tiles rising on the upper side of the bottom tile so as to form an open box.

According to one embodiment of the battery module housing system, the lower part and the upper part are configured to be connected by welding. The welding may be performed, for example, by plastic welding, mirror welding, friction welding, or high-frequency welding.

According to another embodiment of the battery module housing system, the lower part and the upper part are in a connected state such that a cavity is formed between the upper side of the plate and the lower side of the bottom tile, wherein the cavity forms a liquid-tight hollow only accessible via the coolant inlet(s) and the coolant outlet(s). In other words, according to this embodiment, the battery module housing system has been assembled so as to form a battery module housing. Preferably, the connection of the lower part and the upper part is performed by welding, for example, by plastic welding, mirror welding, friction welding, or high-frequency welding.

Another aspect of the invention relates to a method for manufacturing the above described battery module housing system. The method comprises the steps of:
a) Manufacturing, in one piece (i. e., integrally), a lower part of the system, the lower part comprising a plate having: an upper side and a lower side, the lower side being opposite to the upper side with respect to the plate, wherein the upper side of the plate is configured to become connected to an upper part of the system, and the plate further having at least one coolant inlet and at least one coolant outlet. In particular, the upper side of the plate may be configured to become connected to a lower side of a bottom tile of the upper part.
b) Manufacturing, in one piece (i. e., integrally), the upper part of the system, the upper part comprising a tub, the tub being configured for accommodating a battery module, and the tub having a bottom tile having an upper side and a lower side, the lower side being opposite to the upper side with respect to the bottom tile, wherein the lower side of the bottom tile is configured to become connected to the upper side of the plate such that a cavity is formed between the upper side of the plate and the lower side of the bottom tile, wherein the cavity forms a liquid-tight hollow only accessible via the coolant inlet(s) and the coolant outlet(s).

In a preferred embodiment of the method for manufacturing, step a) of integrally manufacturing a lower part of the system is performed by injection molding. Alternatively or at the same time, also step b) of integrally manufacturing an upper part of the system may be performed by injection molding.

Another aspect of the invention relates to a method for assembling the above described battery module housing system, i. e., a method for transforming the battery module housing system from an unconnected state into a connected or assembled state as defined above or, in other words, a method for assembling the battery module housing system into a battery module housing. The method comprises the step of:
a) connecting the lower part and the upper part of the battery module housing system such that a cavity is formed between the upper side of the plate of the lower part and the lower side of the bottom tile of the upper part.

Here, by the term "cavity," in particular a liquid-tight cavity or hollow may be understood.

In a preferred embodiment of the method for assembling, the method comprises the further step of:
b) welding the lower part to the upper part, for example, by plastic welding, mirror welding, friction welding, or high-frequency welding.

Therein, the welding may preferably be performed along a predefined welding line. The welding line may be located on the edge of at least one of the upper side of the plate of the lower part and the lower side of the bottom tile of the upper part.

Further aspects of the present invention could be learned from the dependent claims or the following description.

Summarizing the above, the invention is to build up coolant-channels in a two-part injection molded battery module housing system, and joining these two parts with a state of the art plastic-welding process, e. g. mirror welding, friction welding, high frequency welding, and the like. The welded housing parts form a cavity or hollow, where coolant can circulate.

To increase the heat conduction of the upper part, an additive can be added in the plastic-granulate for the upper-part during the manufacture process.

To increase the burst-pressure property, the guiding-geometry and additional points can also be designed and joint together with the upper part and the lower-part.

### Brief Description of the Drawings

Features will become apparent to those of ordinary skill in the art by describing in detail exemplary embodiments with reference to the attached drawings in which:
- Fig. 1a: illustrates a schematic exploded view of a battery module housing according to the prior art;
- Fig. 1b: illustrates a schematic cross section of the battery module housing according to the prior art;
- Fig. 1c: illustrates a schematic cross section of the battery module housing according to the prior art, the cross section being perpendicular to that of Fig. 1b;
- Fig. 2a: illustrates a schematic exploded view of a battery module housing according to an embodiment of the invention. At the same time, it is a view of the battery module housing system according to the invention in a state not being assembled;
- Fig. 2b: illustrates a part of an exploded view of a battery module housing according to an embodiment of the invention;
- Fig. 3a: illustrates a schematic perspective view of a battery module housing according to an embodiment of the invention. At the same time, it is a view of the battery module housing system in a state being assembled;
- Fig. 3b: illustrates a schematic cross sectional view of a battery module housing according to an embodiment of the invention. At the same time, it is a cross sectional view of the battery module housing system in a state being assembled; and
- Fig. 3c: illustrates a schematic cross sectional view of a battery module housing according to an embodiment of the invention, the cross section being perpendicular to that of Fig. 3b. At the same time, it is a cross sectional view of the battery module housing system in a state being assembled

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present invention should not be construed as being limited thereto.

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present invention.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of ±5% of the value centered on the value. Further, the use of "may" when describing embodiments of the present invention refers to "one or more embodiments of the present invention." Herein, the terms "upper" and "lower" are defined according to the z-axis. For example, the cover is positioned at the upper part of the z-axis, whereas the ground plate is positioned at the lower part thereof.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Figs. 1a - 1c show prior art and have already been described above.

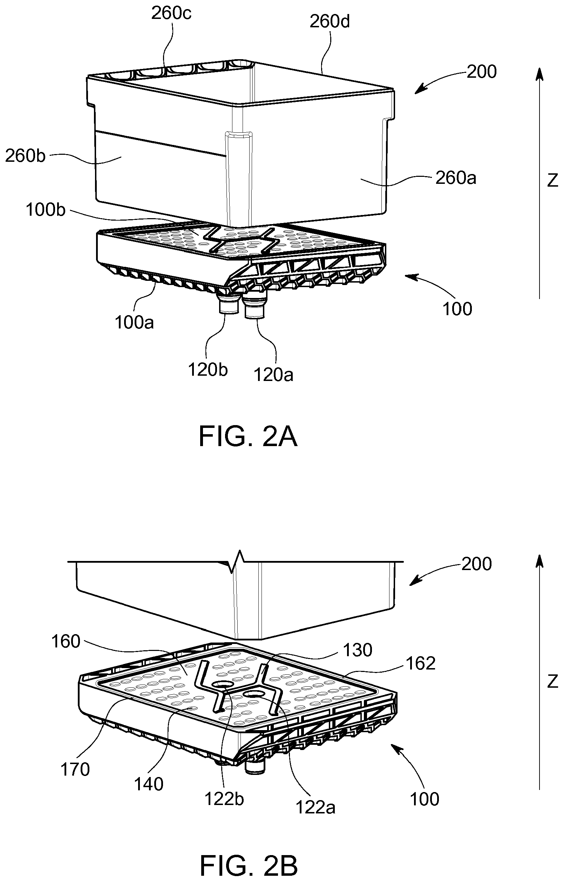

Fig. 2a is an exploded view of a battery module housing system according to an embodiment of the invention. At the same time, it is a view of the battery module housing system in a state not being assembled (unconnected state).

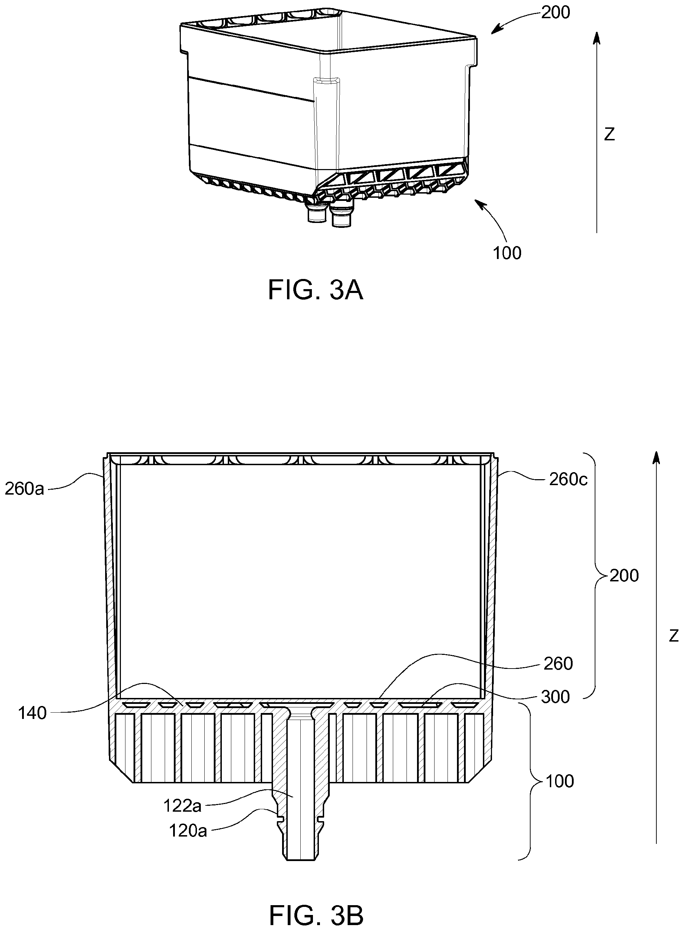

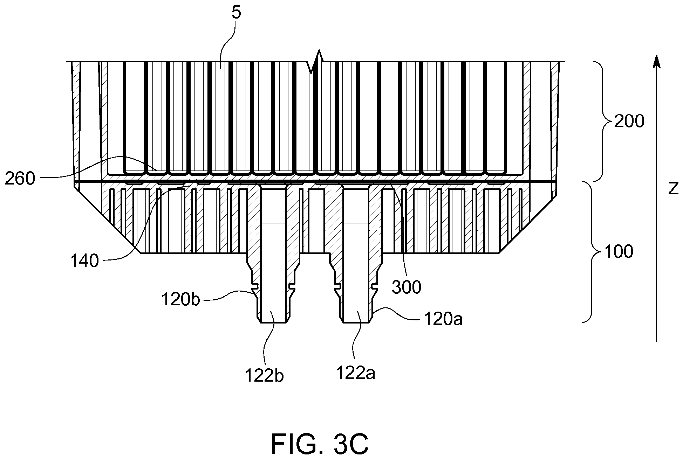

An upper part 200 of the housing system is formed as a tub. The tub is shaped as an open box having a bottom tile 260 (cf. Figs. 3b and 3c) as well as four side tiles 260a, 260b, 260c, 260d. The upper part 200 is manufactured in one piece, i. e., integrally, for example from plastics or resin. Additives to increase the heat conductivity of the material of the upper part 200 can be added to the plastic-granulate during the manufacture process. One or more battery modules 5 (cf. Fig. 3c) can be accommodated in the tub so as to rest on an upper side of the bottom tile 260. Further, a lower part 100 of the housing system is formed as a plate having a lower side 100a and an upper side 100b opposite to the lower side 100a with respect to the plate.

Both, the upper side 100b of the plate and the lower side of the bottom tile 260 have a rectangular shape. Further, the upper side 100b of the plate is congruent or at least essentially congruent to the lower side of the bottom tile 260 of the tub. Accordingly, these surfaces match when connected to each other so that each comer of the lower side of the bottom tile 260 rests on a respective corner of the upper side 100b of the plate (cf. Figs. 3a - 3c).

Attached to the lower side 100a of the plate are two connectors, an inlet connector 120a and an outlet connector 120b that allow for a connection of hoses or conduits to supply coolant or to discharge coolant, respectively. The plate and the connectors are manufactured integrally.

Fig. 2b can be regarded as a detailed view of Fig. 2a, wherein, however, the distance between the lower part 100 and the upper part 200 is expanded so as to make visible details on the upper side 100b of the plate of the lower part 100. On the upper side 100b of the plate is formed a depression 160 that extends almost over the whole surface of the upper side 100b except for a small wall 162 surrounding the depression 160. In other words, the small wall 162 rises on the upper side 100b of the plate on the edge of the plate such that it encompasses/confines the depression 160 in any directions perpendicular to the shown z-axis, i. e., any directions parallel to the upper side 100b of the plate.

The wall 162 and the depression 160 have the effect that when the upper part 200 of the housing system is connected to the lower part 100 in the above described way, a hollow or cavity 300 (cf. Fig. 3b) is formed in the area of the depression 160. The cavity 300 is confined, in directions perpendicular to the z-axis, by the wall 162. In the direction of the z-axis, cavity 300 is confined by the lower side of bottom tile 260 of the upper part 200. In the direction opposite to the direction of the z-axis, cavity 300 is confined by the upper side 100b of the plate. Two cross sectional views of the assembled battery module housing system (i. e., the battery module housing) with the cavity 300 formed between the lower part 100 and the upper part 200 are shown in Figs. 3b and 3c. The lower side of the bottom tile 260 touches the upper side 100b of the plate in the region of wall 162. However, the lower side of the bottom tile 260 does not touch the upper side 100b of the plate in the region of cavity 300, except, in some embodiments, for regions in which a guiding structure and/or welding points are formed (see below).

In order to be able to supply coolant to the cavity 300, an inlet through-hole 122a is arranged in the plate of the lower part 100. The inlet through-hole 122a is located at the position of the inlet connector 120a and also extends through the inlet connector 120a. Correspondingly, in order to be able to discharge coolant from the cavity 300, an outlet through-hole 122b is arranged in the plate of the lower part 100. The outlet through-hole 122b is located at the position of the outlet connector 120b and also extends through the outlet connector 120b.

Further, in order to let the coolant supplied to the cavity stream along a maximum area beneath the lower side of bottom tile 260 of the tub, a guiding structure may be provided in the cavity 300. In the embodiment shown in Fig. 2b, a guiding structure 130 is provided on the upper side 100b of the plate of the lower part 100. The guiding structure 130 forms walls in the interior of cavity 300 that cannot be pervaded by the coolant. Hence, the walls lead a coolant flowing within the cavity 300 on certain paths being predefined by the structure of the walls, i. e., by the guiding structure. In particular, the wall may be formed so as to prevent a coolant streaming out of the coolant inlet through-hole 122a to the coolant outlet through-hole 122b from taking a direct path; this has the advantage that the area of the lower side of bottom tile 260 being cooled by the coolant stream is maximized or at least enlarged. Further branches and junctions of the guiding structure 130 may be provided so as to further guide coolant beneath the lower side of bottom tile 260.

When one ore more battery modules are accommodated in the tub of upper part 200, the bottom tile may sag or being extruded into the cavity 300. Thus, the volume of the cavity 300 may be decreased and/or the bottom tile 260 may be deformed. A deformation of the bottom tile 260 could lead to a decrease of contact between the battery module(s) resting thereon and correspondingly to a decrease of heat dissipation from the battery module(s) via the bottom tile 260 to the cavity 300 and eventually to the coolant.

In order to prevent the bottom tile 260 from sagging or being extruded into the cavity 300, support structures may be provided in the interior of the cavity 300. These support structures are configured to support, in addition to the wall 162 and/or - in some embodiments - the guiding structure 130, the bottom tile 260 when resting on the plate in an assembled state of the battery module housing system. The support structures can be realized as welding points 140 (see below). This way, the overall mechanical stability of the housing system is increased, and in particular also its burst-pressure properties, for example, the mechanical stability against burst leakage.

Fig. 3a shows a battery module housing according to the invention, i. e., a battery module housing system in an assembled state. The upper part 200 of the system is attached and connected to the lower part 100 of the system. The connection is preferably a fixed connection. This can be achieved by welding, for example, by plastic welding, mirror welding, friction welding, or high-frequency welding. In some embodiments, the welding is performed along a predefined welding line 170 along the wall 162 arranged on the upper side 100b of the plate (cf. Fig. 2b). This way, the lower part 100 and the upper part 200 of the system are fixedly and liquid-tight merged together. To further improve the liquid-tightness of the assembled housing system, sealing means maybe used. In addition, the lower part 100 and the upper part 200 may be welded together at welding points 140 serving as support structures (see above) in some embodiments so as to further increase the mechanical stability of the assembled housing system.

Fig. 3b shows a schematic cross sectional view of an (assembled) battery module housing system, i. e., a battery module housing according to an embodiment of the invention. Between the lower side of bottom tile 260 of the upper part 200 and the upper side of the plate of lower part 100, a cavity 300 is formed. Cavity 300 is interrupted, along the cross section, by welding points 140, which can, of course, be flowed around by the coolant in a plane perpendicular to the plane of the shown cross section. An inlet through-hole 122a through the plate of lower part 100 provides access to the cavity 300 for coolant supply. The inlet through-hole 122a extends also through the inlet connector 120a arranged on the lower side of the plate so as to provide a connection means for a hose or conduit for coolant supply.

Eventually, Fig. 3c shows a cross sectional view of a battery module housing according to an embodiment of the invention, the cross section being perpendicular to that of Fig. 3b. Also in this perspective, cavity 300 formed between the lower side of bottom tile 260 of the upper part 200 and the upper side of the plate of lower part 100 is visible, the cavity 300 being interrupted, along the shown cross section, by welding points 140. In addition to the access to the cavity 300 provided by the inlet connector 120a with the inlet through-hole 122a, a second access to the cavity 300 is shown that serves as an outlet connector 120b. The outlet connector 120b comprises an outlet through-hole 122b through the plate of lower part 100 providing access to the cavity 300 for discharging coolant. The outlet through-hole 122b extends also through the outlet connector 120b arranged on the lower side of the plate so as to provide a connection means for a hose or conduit for coolant discharge.

As can be seen in particular from Figs. 3b and 3c, the inlet connector 120a with the inlet through-hole 122a and the outlet connector 120b with the outlet through-hole 120b are formed integrally with the plate so as to form a lower part being manufactured in one piece.

### Reference signs

- z: axis/arrow for providing a reference direction and/or a reference orientation; the tip of the arrow denotes the upward direction
- 5: battery module, comprising several battery cells

- 10: soldered aluminum-plate
- 12a: inlet hose
- 12b: outlet hose
- 20: box for accommodating a battery module
- 22a: cooling-connector for coolant supply
- 22b: cooling-connector for coolant discharge
- 30: cavity
- 70: risings

- 100: lower part
- 100a: lower side of plate
- 100b: upper side of plate
- 120a: inlet connector
- 120b: outlet connector
- 122a: inlet through-hole
- 122b: outlet through-hole
- 130: guiding structure
- 140: welding point(s)
- 160: depression
- 162: wall
- 170: welding line

- 200: upper part
- 260: bottom tile of upper part
- 260a, 260b, 260c, 260d: side tiles of upper part

- 300: cavity

## Claims

1. A battery module housing system for cooling a battery module (5), the battery module housing system comprising a lower part (100) and an upper part (200);
wherein the lower part (100) comprises a plate:
the plate having an upper side (100b) and a lower side (100a), the lower side (100a) being opposite to the upper side (100b) with respect to the plate, wherein the upper side (100b) of the plate is connectable to the upper part (200);
wherein the upper part (200) comprises a tub:
the tub being configured for accommodating the battery module (5);
the tub having a bottom tile (260) having an upper side and a lower side, the lower side being opposite to the upper side with respect to the bottom tile, wherein the lower side of the bottom tile (260) is connectable to the upper side (100b) of the plate;
wherein the upper side (100b) of the plate is connectable to the lower side of the bottom tile (260) such that a cavity (300) is formed between the upper side (100b) of the plate and the lower side of the bottom tile (260), wherein the cavity (300) forms a liquid-tight hollow only accessible via the coolant inlet(s) and the coolant outlet(s);
**characterized in that**:
the plate has at least one coolant inlet and at least one coolant outlet;
the plate inclusive of the coolant inlet(s) and the coolant outlet(s) is formed integrally; and
the tub is formed integrally.

2. The battery module housing system according to claim 1, wherein the lower part (100) is manufactured in one piece by injection molding and/or the upper part (200) is manufactured in one piece by injection molding.

3. The battery module housing system according to claim 1 or 2, wherein:
the lower part (100) is made of plastics or resin; and/or
the upper part (200) is made of plastics or resin, wherein preferably an additive is comprised in the upper part, the additive being suitable to increase the heat conductivity of the upper part (200).

4. The battery module housing system according to any one of claims 1 to 3, wherein the upper side (100b) of the plate and the lower side of the bottom tile (260) are congruent or essentially congruent; and
wherein preferably the cavity (300) has a flat shape and extends along the lower side of the bottom tile (260).

5. The battery module housing system according to any one of claims 1 to 4,
wherein a depression (160) is formed on the upper side (100b) of the plate and is confined by a wall (162) rising along the edge of the upper side (100b) of the plate, and wherein the upper side (100b) of the plate is connectable via the wall (162) to the lower side of the bottom tile (260); or
wherein a depression is formed on the lower side of the bottom tile (260) and is confined by a wall rising along the edge of the lower side of the bottom tile (260), and wherein the lower side of the bottom tile (260) is connectable via the wall to the upper side of the plate; or
wherein a first depression is formed on the upper side (100b) of the plate and is confined by a first wall rising along the edge of the upper side (100b) of the plate, a second depression is formed on the lower side of the bottom tile (260) and is confined by a second wall rising along the edge of the lower side of the bottom tile (260), and the plate and the bottom tile (260) are connectable such that the first wall and the second wall rest on each other along their complete lengths.

6. The battery module housing system according to any one of claims 1 to 5, wherein:
each coolant inlet comprises an inlet through-hole (122a) in the plate of the bottom part (100) and an inlet connector (120a) formed on a lower side (100a) of the plate, the inlet connector (120a) being configured to be connected to a delivering ductwork, for example a hose or a conduit, such that coolant delivered by the delivering ductwork is led through the inlet through-hole (122a) to the upper side (100b) of the plate; and
each coolant outlet comprises an outlet through-hole (122b) in the plate of the bottom part (100) and an outlet connector (120b) formed on a lower side (100a) of the plate, the outlet connector (120b) being configured to be connected to discharge ductwork, for example a hose or a conduit, such that coolant can be led from the upper side of the plate through the outlet through-hole into the discharge ductwork; and
wherein preferably each inlet connector and each outlet connector is shaped as pin formed on the lower side of the plate at the location of the respective through-hole through the plate, the respective through-hole extending further through the pin.

7. The battery module housing system according to any one of claims 1 to 6,
wherein at least on one of the upper side (100b) of the plate and the lower side of the bottom tile (260) is formed a guiding geometry (130) suitable for guiding a coolant streaming into the cavity (300) via the coolant inlet to the coolant outlet along at least one path,
wherein the path may have a plurality of branches, a plurality of junctions and/or a plurality of by-passes.

8. The battery module housing system according to claim 7, wherein the guiding geometry (130) is configured for preventing a coolant flowing from the coolant inlet to the coolant outlet from taking the straight line from the coolant inlet to the coolant outlet.

9. The battery module housing system according to any one of claims 1 to 8,
wherein on at least on one of the upper side (100b) of the plate and the lower side of the bottom tile (260) are formed one or more risings (140) suitable for increasing the mechanical stability of the assembled battery module housing system such as the burst-pressure properties of the assembled battery module housing system;
wherein preferably the one or more risings (140) are located at least in the center of the cavity (300) of the battery module system when being in the assembled state.

10. The battery module housing system according to claim 9, wherein the rising(s) (140) formed on at least one of the upper side (100b) of the plate and the lower side of the bottom tile (260) extend to the opposite side of the cavity (300) when the battery module system is in the assembled state.

11. The battery module housing system according to any one of claims 1 to 10, wherein both, the upper side (100b) of the plate and the lower side of the bottom tile (260) are of a rectangular shape, and wherein the upper part (200) further comprises four side tiles (260a, 260b, 260c, 260d) rising on the upper side of the bottom tile (260) so as to form an open box.

12. The battery module housing system according to any one of claims 1 to 11, wherein the lower part (100) and the upper part (200) are configured to be connected by welding, for example, by plastic welding, mirror welding, friction welding, or high-frequency welding.

13. The battery module housing system according to any one of claims 1 to 12,
wherein the lower part (100) and the upper part (200) are connected such that a cavity (300) is formed between the upper side (100b) of the plate and the lower side of the bottom tile (260), wherein the cavity (300) forms a liquid-tight hollow only accessible via the coolant inlet(s) and the coolant outlet(s); and
wherein preferably the connection of the lower part (100) and the upper part (200) is performed by welding, for example, by plastic welding, mirror welding, friction welding, or high-frequency welding.

14. A method for manufacturing the battery module housing system according to any one of claims 1 to 13, the method comprising the steps of:
a) manufacturing, in one piece, a lower part (100) of the system, the lower part (100) comprising a plate having: an upper side (100b) and a lower side (100a), the lower side (100a) being opposite to the upper side (100b) with respect to the plate, wherein the upper side (100b) of the plate is configured to become connected to an upper part (200) of the system, and the plate further having at least one coolant inlet and at least one coolant outlet;
b) manufacturing, in one piece, the upper part (200) of the system, the upper part (200) comprising a tub, the tub being configured for accommodating a battery module (5), and the tub having a bottom tile (260) having an upper side and a lower side, the lower side being opposite to the upper side with respect to the bottom tile (260), wherein the lower side of the bottom tile (260) is configured to become connected to the upper side (100b) of the plate such that a cavity (300) is formed between the upper side (100b) of the plate and the lower side of the bottom tile (260), wherein the cavity (300) forms a liquid-tight hollow only accessible via the coolant inlet(s) and the coolant outlet(s).

15. The method for manufacturing according to claim 14,
wherein step a) of integrally manufacturing a lower part (100) of the system is performed by injection molding; and/or
wherein step b) of integrally manufacturing an upper part (200) of the system is performed by injection molding.

16. A method for assembling the battery module housing system according to any one of claims 1 to 13, the method comprising the step of:
a) connecting the lower part (100) and the upper part (200) of the battery module housing system such that a cavity (300) is formed between the upper side (100b) of the plate of the lower part (100) and the lower side of the bottom tile (260) of the upper part (200).

17. The method for assembling according to claim 16, wherein the method comprises the further step of:
b) welding the lower part (100) to the upper part (200), for example, by plastic welding, mirror welding, friction welding, or high-frequency welding;
wherein preferably the welding is performed along a predefined welding line (170) being located on the edge of at least one of the upper side (100b) of the plate of the lower part (100) and the lower side of the bottom tile (260) of the upper part (200).

## Patentansprüche

1. Ein Batteriemodulgehäusesystem zur Kühlung eines Batteriemoduls (5), wobei das Batteriemodulgehäusesystem einen unteren Teil (100) und einen oberen Teil (200) aufweist;
wobei der untere Teil (100) eine Platte aufweist:
wobei die Platte eine Oberseite (100b) und eine Unterseite (100a) aufweist, wobei die Unterseite (100a) der Oberseite (100b) bezüglich der Platte gegenüberliegt, wobei die Oberseite (100b) der Platte mit dem oberen Teil (200) verbunden werden kann;
wobei der obere Teil (200) eine Wanne aufweist:
wobei die Wanne konfiguriert ist, um das Batteriemodul (5) aufzunehmen;
wobei die Wanne eine untere Platte (260), die eine Oberseite und eine Unterseite aufweist, aufweist, wobei die Unterseite der Oberseite bezüglich der unteren Platte gegenüberliegt, wobei die Unterseite der unteren Platte (260) mit der Oberseite (100b) der Platte verbunden werden kann;
wobei die Oberseite (100b) der Platte derart mit der Unterseite der unteren Platte (260) verbunden werden kann, dass ein Hohlraum (300) zwischen der Oberseite (100b) der Platte und der Unterseite der unteren Platte (260) ausgebildet wird, wobei der Hohlraum (300) eine flüssigkeitsdichte Aushöhlung, die nur über den Kühlmitteleinlass/die Kühlmitteleinlässe und den Kühlmittelauslass/die Kühlmittelauslässe zugänglich ist, ausbildet;
**dadurch gekennzeichnet, dass**
die Platte zumindest einen Kühlmitteleinlass und zumindest einen Kühlmittelauslass aufweist;
die Platte einschließlich des Kühlmitteleinlasses/der Kühlmitteleinlässe und des Kühlmittelauslasses/der Kühlmittelauslässe einstückig ausgebildet ist; und
die Wanne einstückig ausgebildet ist.

2. Das Batteriemodulgehäusesystem nach Anspruch 1, wobei der untere Teil (100) einstückig durch Spritzgießen hergestellt wird und/oder der obere Teil (200) einstückig durch Spritzgießen hergestellt wird.

3. Das Batteriemodulgehäusesystem nach Anspruch 1 oder 2, wobei:
der untere Teil (100) aus Kunststoff oder Wachs besteht; und/oder
der obere Teil (200) aus Kunststoff oder Wachs besteht, wobei vorzugsweise ein Additiv im oberen Teil enthalten ist, wobei das Additiv geeignet ist, um die Wärmeleitfähigkeit des oberen Teils (200) zu erhöhen.

4. Das Batteriemodulgehäusesystem nach einem der Ansprüche 1 bis 3, wobei die Oberseite (100b) der Platte und die Unterseite der unteren Platte (260) deckungsgleich oder im Wesentlichen deckungsgleich sind; und
wobei der Hohlraum (300) vorzugsweise eine flache Form aufweist und sich entlang der Unterseite der unteren Platte (260) erstreckt.

5. Das Batteriemodulgehäusesystem nach einem der Ansprüche 1 bis 4,
wobei eine Vertiefung (160) auf der Oberseite (100b) der Platte ausgebildet ist und von einer Wand (162), die sich entlang des Randes der Oberseite (100b) der Platte erhebt, begrenzt wird, und wobei die Oberseite (100b) der Platte über die Wand (162) mit der Unterseite der unteren Platte (260) verbunden werden kann; oder
wobei eine Vertiefung auf der Unterseite der unteren Platte (260) ausgebildet ist und von einer ersten Wand, die sich entlang des Randes der Unterseite der unteren Platte (260) erhebt, begrenzt wird, und wobei die Unterseite der unteren Platte (260) über die Wand mit der Oberseite der Platte verbunden werden kann; oder
wobei eine erste Vertiefung auf der Oberseite (100b) der Platte ausgebildet ist und von einer Wand, die sich entlang des Randes der Oberseite (100b) der Platte erhebt, begrenzt wird, wobei eine zweite Vertiefung auf der Unterseite der unteren Platte (260) ausgebildet ist und von einer zweiten Wand, die sich entlang des Randes der Unterseite der unteren Platte (260) erhebt, begrenzt wird, und wobei die Platte und die untere Platte (260) derart verbunden werden können, dass die erste Wand und die zweite Wand entlang ihrer gesamten Längen aufeinander ruhen.

6. Das Batteriemodulgehäusesystem nach einem der Ansprüche 1 bis 5, wobei:
jeder Kühlmitteleinlass ein Einlass-Durchgangsloch (122a) in der Platte des unteren Teils (100) und einen Einlassverbinder (120a), der auf einer Unterseite (100a) der Platte ausgebildet ist, aufweist, wobei der Einlassverbinder (120a) konfiguriert ist, um mit einem Zuführungsrohrsystem, beispielsweise einem Schlauch oder einer Leitung, derart verbunden zu werden, dass ein vom Zuführungsrohrsystem zugeführtes Kühlmittel durch das Einlass-Durchgangsloch (122a) zur Oberseite (100b) der Platte geleitet wird; und
jeder Kühlmittelauslass ein Auslass-Durchgangsrohr (122b) in der Platte des unteren Teils (100) und einen Auslassverbinder (120b), der auf einer Unterseite (100a) der Platte ausgebildet ist, aufweist, wobei der Auslassverbinder (120b) konfiguriert ist, um mit einem Abführungsrohrsystem, beispielsweise einem Schlauch oder einer Leitung, derart verbunden zu werden, dass Kühlmittel von der Oberseite der Platte durch das Auslass-Durchgangsrohr in das Abführungsrohrsystem geleitet werden kann; und
wobei jeder Einlassverbinder und jeder Auslassverbinder vorzugsweise als Stift, der auf der Unterseite der Platte an der Stelle des jeweiligen Durchgangslochs durch die Platte ausgebildet wird, geformt ist, wobei sich das jeweilige Durchgangsloch weiter durch den Stift erstreckt.

7. Das Batteriemodulgehäusesystem nach einem der Ansprüche 1 bis 6,
wobei zumindest eine der Oberseite (100b) der Platte und der Unterseite der unteren Platte (260) als Leitgeometrie (130) ausgebildet ist, die geeignet ist, um ein Kühlmittel, das über den Kühlmitteleinlass in den Hohlraum (300) strömt, entlang zumindest eines Pfads zum Kühlmittelauslass zu leiten,
wobei der Pfad eine Vielzahl von Abzweigungen, eine Vielzahl von Kreuzungen und/oder eine Vielzahl von Umführungen aufweisen kann.

8. Das Batteriemodulgehäusesystem nach Anspruch 7, wobei die Leitgeometrie (130) konfiguriert ist, um zu verhindern, dass ein Kühlmittel, das vom Kühlmitteleinlass zum Kühlmittelauslass strömt, die gerade Linie vom Kühlmitteleinlass zum Kühlmittelauslass nimmt.

9. Das Batteriemodulgehäusesystem nach einem der Ansprüche 1 bis 8,
wobei zumindest auf einer der Oberseite (100b) der Platte und der Unterseite der unteren Platte (260) eine oder mehrere Erhebungen (140) ausgebildet sind, die geeignet sind, um die mechanische Stabilität des zusammengesetzten Batteriemodulgehäusesystems, wie die Berstdruckeigenschaften des zusammengesetzten Batteriemodulgehäusesystems, zu erhöhen;
wobei die eine oder die mehreren Erhebungen (140) vorzugsweise zumindest in der Mitte des Hohlraums (300) des Batteriemodulgehäusesystems positioniert sind, wenn dieses im zusammengesetzten Zustand ist.

10. Das Batteriemodulgehäusesystem nach Anspruch 9, wobei die Erhebung(en) (140), die auf zumindest einer der Oberseite (100b) der Platte und der Unterseite der unteren Platte (260) ausgebildet ist/sind, sich zur gegenüberliegenden Seite des Hohlraums (300) erstrecken, wenn das Batteriemodulgehäusesystem im zusammengesetzten Zustand ist.

11. Das Batteriemodulgehäusesystem nach einem der Ansprüche 1 bis 10, wobei sowohl die Oberseite (100b) der Platte als auch die Unterseite der unteren Platte (260) von rechteckiger Form sind, und wobei der obere Teil (200) ferner vier Seitenplatten (260a, 260b, 260c, 260d) aufweist, die sich auf der Oberseite der unteren Platte (260) erheben, um einen offenen Kasten auszubilden.

12. Das Batteriemodulgehäusesystem nach einem der Ansprüche 1 bis 11, wobei der untere Teil (100) und der obere Teil (200) konfiguriert sind, um durch Schweißen, beispielsweise Kunststoffschweißen, Spiegelschweißen, Reibschweißen oder Hochfrequenzschweißen, verbunden zu werden.

13. Das Batteriemodulgehäusesystem nach einem der Ansprüche 1 bis 12,
wobei der untere Teil (100) und der obere Teil (200) derart verbunden sind, dass ein Hohlraum (300) zwischen der Oberseite (100b) der Platte und der Unterseite der unteren Platte (260) ausgebildet wird, wobei der Hohlraum (300) eine flüssigkeitsdichte Aushöhlung, die nur über den Kühlmitteleinlass/die Kühlmitteleinlässe und den Kühlmittelauslass/die Kühlmittelauslässe zugänglich ist, ausbildet; und
wobei die Verbindung des unteren Teils (100) und des oberen Teils (200) vorzugsweise durch Schweißen, beispielsweise Kunststoffschweißen, Spiegelschweißen, Reibschweißen oder Hochfrequenzschweißen, durchgeführt wird.

14. Ein Verfahren zur Herstellung des Batteriemodulgehäusesystems nach einem der Ansprüche 1 bis 13, wobei das Verfahren die folgenden Schritte aufweist:
a) Herstellen eines unteren Teils (100) des Systems in einem Stück, wobei der untere Teil (100) eine Platte aufweist, die Folgendes aufweist: eine Oberseite (100b) und eine Unterseite (100a), wobei die Unterseite (100a) der Oberseite (100b) bezüglich der Platte gegenüberliegt, wobei die Oberseite (100b) der Platte konfiguriert ist, um mit einem oberen Teil (200) des Systems verbunden zu werden, und wobei die Platte ferner zumindest einen Kühlmitteleinlass und zumindest einen Kühlmittelauslass aufweist;
b) Herstellen des oberen Teils (200) des Systems in einem Stück, wobei der obere Teil (200) eine Wanne aufweist, wobei die Wanne konfiguriert ist, um ein Batteriemodul (5) aufzunehmen, und die Wanne eine untere Platte (260), die eine Oberseite und eine Unterseite aufweist, aufweist, wobei die Unterseite der Oberseite bezüglich der unteren Platte (260) gegenüberliegt, wobei die Unterseite der unteren Platte (260) konfiguriert ist, um derart mit der Oberseite (100b) der Platte verbunden zu werden, dass ein Hohlraum (300) zwischen der Oberseite (100b) der Platte und der Unterseite der unteren Platte (260) ausgebildet wird, wobei der Hohlraum (300) eine flüssigkeitsdichte Aushöhlung, die nur über den Kühlmitteleinlass/die Kühlmitteleinlässe und den Kühlmittelauslass/die Kühlmittelauslässe zugänglich ist, ausbildet.

15. Das Herstellungsverfahren nach Anspruch 14,
wobei Schritt a) des einstückigen Herstellens eines unteren Teils (100) des Systems durch Spritzgießen durchgeführt wird; und/oder
wobei Schritt b) des einstückigen Herstellens eines oberen Teils (200) des Systems durch Spritzgießen durchgeführt wird.

16. Ein Verfahren zum Zusammensetzen des Batteriemodulgehäusesystems nach einem der Ansprüche 1 bis 13, wobei das Verfahren den folgenden Schritt aufweist:
a) Verbinden des unteren Teils (100) und des oberen Teils (200) des Batteriemodulgehäusesystems derart, dass ein Hohlraum (300) zwischen der Oberseite (100b) der Platte des unteren Teils (100) und der Unterseite der unteren Platte (260) des oberen Teils (200) ausgebildet wird.

17. Das Zusammensetzungsverfahren nach Anspruch 16, wobei das Verfahren den folgenden weiteren Schritt aufweist:
b) Verschweißen des unteren Teils (100) mit dem oberen Teil (200), beispielsweise durch Kunststoffschweißen, Spiegelschweißen, Reibschweißen oder Hochfrequenzschweißen;
wobei das Schweißen vorzugsweise entlang einer vordefinierten Schweißnaht (170) durchgeführt wird, die auf dem Rand zumindest einer der Oberseite (100b) der Platte des unteren Teils (100) und der Unterseite der unteren Platte (260) des oberen Teils (200) positioniert ist.

## Revendications

1. Système de boîtier de module de batterie pour refroidir un module de batterie (5), le système de boîtier de module de batterie comprenant une partie inférieure (100) et une partie supérieure (200) ;
dans lequel la partie inférieure (100) comprend une plaque :
la plaque ayant un côté supérieur (100b) et un côté inférieur (100a), le côté inférieur (100a) étant opposé au côté supérieur (100b) par rapport à la plaque, où le côté supérieur (100b) de la plaque peut être raccordé à la partie supérieure (200) ;
dans lequel la partie supérieure (200) comprend un bac :
le bac étant configuré pour loger le module de batterie (5) ;
le bac ayant un carreau inférieur (260) ayant un côté supérieur et un côté inférieur, le côté inférieur étant opposé au côté supérieur par rapport au carreau inférieur, où le côté inférieur du carreau inférieur (260) peut être raccordé au côté supérieur (100b) de la plaque ;
dans lequel le côté supérieur (100b) de la plaque peut être raccordé au côté inférieur du carreau inférieur (260) de sorte qu'une cavité (300) est formée entre le côté supérieur (100b) de la plaque et le côté inférieur du carreau inférieur (260), où la cavité (300) forme un creux étanche au liquide uniquement accessible via l'entrée (les entrées) de réfrigérant et la sortie (les sorties) de réfrigérant ;
**caractérisé en ce que** :
la plaque a au moins une entrée de réfrigérant et au moins une sortie de réfrigérant ;
la plaque y compris l'entrée (les entrées) de réfrigérant et la sortie (les sorties) de réfrigérant est formée de manière solidaire ; et
le bac est formé de manière solidaire.

2. Système de boîtier de module de batterie selon la revendication 1, dans lequel la partie inférieure (100) est fabriquée d'un seul tenant par moulage par injection et/ou la partie supérieure (200) est fabriquée d'un seul tenant par moulage par injection.

3. Système de boîtier de module de batterie selon la revendication 1 ou 2, dans lequel :
la partie inférieure (100) est réalisée à partir de plastique ou de résine ; et/ou
la partie supérieure (200) est réalisée à partir de plastique ou de résine, où de préférence un additif est compris dans la partie supérieure, l'additif étant approprié pour augmenter la conductivité thermique de la partie supérieure (200).

4. Système de boîtier de module de batterie selon l'une quelconque des revendications 1 à 3, dans lequel le côté supérieur (100b) de la plaque et le côté inférieur du carreau inférieur (260) sont congruents ou essentiellement congruents ; et
dans lequel, de préférence, la cavité (300) a une forme plate et s'étend le long du côté inférieur du carreau inférieur (260).

5. Système de boîtier de module de batterie selon l'une quelconque des revendications 1 à 4,
dans lequel un enfoncement (160) est formé sur le côté supérieur (100b) de la plaque et est confiné par une paroi (162) montant le long du bord du côté supérieur (100b) de la plaque, et dans lequel le côté supérieur (100b) de la plaque peut être raccordé via la paroi (162) au côté inférieur du carreau inférieur (260) ; ou
dans lequel un enfoncement est formé sur le côté inférieur du carreau inférieur (260) et est confiné par une paroi montant le long du bord du côté inférieur du carreau inférieur (260), et dans lequel le côté inférieur du carreau inférieur (260) peut être raccordé via la paroi, au côté supérieur de la plaque ; ou
dans lequel un premier enfoncement est formé sur le côté supérieur (100b) de la plaque et est confiné par une première paroi montant le long du bord du côté supérieur (100b) de la plaque, un second enfoncement est formé sur le côté inférieur du carreau inférieur (260) et est confiné par une seconde paroi montant le long du bord du côté inférieur du carreau inférieur (260), et la plaque et le carreau inférieur (260) peuvent être raccordés de sorte que la première paroi et la seconde paroi s'appuient l'une sur l'autre le long de toutes leurs longueurs.

6. Système de boîtier de module de batterie selon l'une quelconque des revendications 1 à 5, dans lequel :
chaque entrée de réfrigérant comprend un trou débouchant d'entrée (122a) dans la plaque de la partie inférieure (100) et un connecteur d'entrée (120a) formé sur un côté inférieur (100a) de la plaque, le connecteur d'entrée (120a) étant configuré pour être raccordé à un système de gaines de distribution, par exemple un tuyau flexible ou un conduit, de sorte que le réfrigérant distribué par le système de gaines de distribution est conduit par le trou débouchant d'entrée (122a) jusqu'au côté supérieur (100b) de la plaque ; et
chaque sortie de réfrigérant comprend un trou débouchant de sortie (122b) dans la plaque de la partie inférieure (100) et un connecteur de sortie (120b) formé sur un côté inférieur (100a) de la plaque, le connecteur de sortie (120b) étant configuré pour être raccordé au système de gaines de décharge, par exemple un tuyau flexible ou un conduit, de sorte que le réfrigérant peut être conduit du côté supérieur de la plaque en passant par le trou débouchant de sortie dans le système de gaines de décharge ; et
dans lequel de préférence chaque connecteur d'entrée et chaque connecteur de sortie sont formés comme une broche formée sur le côté inférieur de la plaque à l'emplacement du trou débouchant respectif à travers la plaque, le trou débouchant respectif s'étendant davantage à travers la broche.

7. Système de boîtier de module de batterie selon l'une quelconque des revendications 1 à 6,
dans lequel au moins l'un parmi le côté supérieur (100b) de la plaque et le côté inférieur du carreau inférieur (260) forme une géométrie de guidage (130) appropriée pour guider un réfrigérant s'écoulant dans la cavité (300) via l'entrée de réfrigérant vers la sortie de réfrigérant le long d'au moins une trajectoire,
dans lequel la trajectoire peut avoir une pluralité de branches, une pluralité de jonctions et/ou une pluralité de dérivations.

8. Système de boîtier de module de batterie selon la revendication 7, dans lequel la géométrie de guidage (130) est configurée pour empêcher l'écoulement d'un réfrigérant de l'entrée de réfrigérant à la sortie de réfrigérant en prenant la ligne droite de l'entrée de réfrigérant à la sortie de réfrigérant.

9. Système de boîtier de module de batterie selon l'une quelconque des revendications 1 à 8,
dans lequel sur au moins l'un parmi le côté supérieur (100b) de la plaque et le côté inférieur du carreau inférieur (260), sont formées une ou plusieurs élévations (140) appropriées pour augmenter la stabilité mécanique du système de boîtier de module de batterie assemblé telles que les propriétés de pression de rupture du système de boîtier de module de batterie assemblé ;
dans lequel, de préférence, les une ou plusieurs élévations (140) sont positionnées au moins dans le centre de la cavité (300) du système de module de batterie lorsqu'il est à l'état assemblé.

10. Système de boîtier de module de batterie selon la revendication 9, dans lequel l'élévation (les élévations) (140) formée (s) sur au moins l'un parmi le côté supérieur (100b) de la plaque et le côté inférieur du carreau inférieur (260) s'étendent vers le côté opposé de la cavité (300) lorsque le système de module de batterie est à l'état assemblé.

11. Système de boîtier de module de batterie selon l'une quelconque des revendications 1 à 10, dans lequel à la fois le côté supérieur (100b) de la plaque et le côté inférieur du carreau inférieur (260) sont de forme rectangulaire, et dans lequel la partie supérieure (200) comprend en outre quatre carreaux latéraux (260a, 260b, 260c, 260d) montant sur le côté supérieur du carreau inférieur (260) afin de former une boîte ouverte.

12. Système de boîtier de module de batterie selon l'une quelconque des revendications 1 à 11, dans lequel la partie inférieure (100) et la partie supérieure (200) sont configurées pour être raccordées par soudage, par exemple, par soudage plastique, soudage miroir, soudage par friction ou soudage à haute fréquence.

13. Système de boîtier de module de batterie selon l'une quelconque des revendications 1 à 12,
dans lequel la partie inférieure (100) et la partie supérieure (200) sont raccordées de sorte qu'une cavité (300) est formée entre le côté supérieur (100b) de la plaque et le côté inférieur du carreau inférieur (260), dans lequel la cavité (300) forme un creux étanche au liquide uniquement accessible via l'entrée (les entrées) de réfrigérant et la sortie (les sorties) de réfrigérant ; et
dans lequel, de préférence, le raccordement de la partie inférieure (100) et de la partie supérieure (200) est réalisé par soudage, par exemple par soudage plastique, soudage miroir, soudage par friction ou soudage à haute fréquence.

14. Procédé pour fabriquer le système de boîtier de module de batterie selon l'une quelconque des revendications 1 à 13, le procédé comprenant les étapes consistant à :
a) fabriquer, d'un seul tenant, une partie inférieure (100) du système, la partie inférieure (100) comprenant une plaque ayant : un côté supérieur (100b) et un côté inférieur (100a), le côté inférieur (100a) étant opposé au côté supérieur (100b) par rapport à la plaque, où le côté supérieur (100b) de la plaque est configuré pour être raccordé à une partie supérieure (200) du système, et la plaque ayant en outre au moins une entrée de réfrigérant et au moins une sortie de réfrigérant ;
b) fabriquer, d'un seul tenant, la partie supérieure (200) du système, la partie supérieure (200) comprenant un bac, le bac étant configuré pour loger un module de batterie (5), et le bac ayant un carreau inférieur (260) ayant un côté supérieur et un côté inférieur, le côté inférieur étant opposé au côté supérieur par rapport au carreau inférieur (260), où le côté inférieur du carreau inférieur (260) est configuré pour être raccordé au côté supérieur (100b) de la plaque de sorte qu'une cavité (300) est formée entre le côté supérieur (100b) de la plaque et le côté inférieur du carreau inférieur (260), où la cavité (300) forme un creux étanche au liquide uniquement accessible via l'entrée (les entrées) de réfrigérant et la sortie (les sorties) de réfrigérant.

15. Procédé de fabrication selon la revendication 14,
dans lequel l'étape a) consistant à fabriquer de manière solidaire une partie inférieure (100) du système est réalisée par moulage par injection ; et/ou
dans lequel l'étape b) consistant à fabriquer une partie supérieure (200) du système est réalisée par moulage par injection.

16. Procédé d'assemblage d'un système de boîtier de module de batterie selon l'une quelconque des revendications 1 à 13, le procédé comprenant l'étape consistant à :
a) raccorder la partie inférieure (100) et la partie supérieure (200) du système de boîtier de module de batterie de sorte qu'une cavité (300) est formée entre le côté supérieur (100b) de la plaque (100) et le côté inférieur du carreau inférieur (260) de la partie supérieure (200).

17. Procédé d'assemblage selon la revendication 16, où le procédé comprend l'étape supplémentaire consistant à :
b) souder la partie inférieure (100) à la partie supérieure (200), par exemple par soudage plastique, soudage miroir, soudage par friction ou soudage à haute fréquence ;
dans lequel, de préférence, le soudage est réalisé le long d'une ligne de soudage (170) prédéfinie qui est située sur le bord d'au moins l'un parmi le côté supérieur (100b) de la plaque de la partie inférieure (100) et le côté inférieur du carreau inférieur (260) de la partie supérieure (200).
